# EUROPÄISCHE PATENTANMELDUNG

(11) **EP 2 060 549 A2**
(43) Veröffentlichungstag der Anmeldung: **20.05.2009**
(21) Anmeldenummer: 08018116.7
(22) Anmeldetag: 16.10.2008
(51) Int. Cl.: C05D 9/00, C05F 11/04, A01G 9/10, C05F 11/02, A01G 31/00

(54) **Kultursubstrat**

(30) Priorität: 14.11.2007 DE 102007054667
(71) Anmelder: Rheinbraun Brennstoff GmbH, 50935 Köln (DE)
(72) Erfinder: Knafla, Hagen, 48291 Telgte (DE); Lessenich, Hans Albert, 50129 Bergheim (DE); Roth-Kleyer, Stephan, 65385 Rüdesheim (DE)
(74) Vertreter: Polypatent

(57) **Zusammenfassung**

Kultursubstrat als antropogen hergestellter Bodenersatz auf Basis mineralischer Substratausgangsstoffe, umfassend wenigstens einen Zusatz eines organischen Substratausgangsstoffs, dadurch gekennzeichnet, dass der organische Substratausgangsstoff Xylit umfasst.

## Beschreibung

Die Erfindung betrifft ein Kultursubstrat als antropogen hergestellter Bodenersatz auf Basis mineralischer Substratausgangsstoffe, umfassend wenigstens einen Zusatz eines organischen Substratausgangsstoffs.

Auf Basis mineralischer Substratausgangsstoffe im Sinne der Erfindung bedeutet, dass der überwiegende Anteil des Kultursubstrats von mineralischer Beschaffenheit ist.

Kultursubstrate sind im Gegensatz zu diversen Bodenarten künstlich hergestellter Bodenersatz, der zumeist aus mehreren miteinander vermischten Stoffen besteht.

Im Gegensatz hierzu beschreibt der Begriff "Boden" natürliches, durch physikalische, chemische und biologische Vorgänge entstandenes Material, wobei die genaue Zusammensetzung weder definiert noch bestimmt ist.

Kultursubstrate im Sinne der Erfindung werden auch als Pflanzsubstrate bezeichnet und werden für die Außenbegrünung von Dächern, Terrassen, Kübeln, für die Innenbegrünung von Pflanzkübeln in Gebäuden, oder beispielsweise auch als Baumsubstrate zur Auffüllung von Pflanzgruben verwendet.

Von den Kultur- oder Pflanzsubstraten zu unterscheiden sind sog. Bodenverbesserungsstoffe, die auf Basis organischer Materialien hergestellt werden. Bodenverbesserungsstoffe werden als Humusersatz sowie zur Verbesserung der physikalischen, chemischen und biologischen Eigenschaften von Böden verwendet.

Kultursubstrate bzw. Pflanzsubstrate müssen je nach Einsatzzweck unterschiedliche Anforderungen im Hinblick auf den Nährstoffgehalt, die Wasserspeicherkapazität, den pH-Wert und den Salzgehalt etc. erfüllen. Schließlich müssen auch physikalische Eigenschaften, wie beispielsweise Trittfestigkeit, Frostfestigkeit, Erosionsbeständigkeit und dergleichen, erfüllt werden. Dabei ist es die Aufgabe von Kultursubstraten, den Wurzeln der Bepflanzung Halt zu bieten und ein ideales chemisches, physikalisches und biologisches Milieu für deren Wachstum zu schaffen. Das Kultursubstrat muss strukturstabil sein, einsickerndes Wasser pflanzenverfügbar speichern und lediglich Überschusswasser abgeben.

Bei bekannten Kultursubstraten werden in der Regel mineralische Substratausgangsstoffe mit organischen Substratausgangsstoffen, wie beispielsweise Torf, Rindenhumus, Holzfasern, Komposten oder dergleichen gemischt.

Die Verwendung von Torf als organischem Substratausgangsstoff ist aus Gründen des Moorschutzes nicht wünschenswert. Rindenprodukte, Komposte oder anderes aufbereitetes Pflanzenmaterial sind teilweise mit Schadstoffen (z. B. Schwermetalle aus dem Kompost oder den Rindenprodukten) oder Fremdstoffen (z. B. Nägel, Glas, Kunststoffe aus dem Kompost) belastet oder weisen hohe Salzgehalte auf. Je nach Verwendungszweck des Kultursubstrats ist der Nährstoffgehalt der organischen Substratausgangsstoffe zu hoch, oder die Nährstoffe werden zu schnell abgegeben.

Ein Kultursubstrat der eingangs genannten Art ist beispielsweise aus der DE 101 42 407 A1 bekannt.

In der DE 101 42 407 A1 ist ebenfalls das Problem beschrieben, dass bekannte Pflanzsubstrate mit Torf auch wegen der Zersetzung der organischen Substanz und/oder Ausschlämmung von Feinanteilen an Ton und Tuff Stauschichten entwickeln und zur Versumpfung neigen, oder aber austrocknen oder nicht windfest und trittfest sind. Deshalb wird in der DE 101 42 407 A1 ein gattungsgemäßes Pflanzsubstrat auf Basis vulkanischer Gesteine oder Gesteinsgemische vorgeschlagen, das sich dadurch auszeichnet, dass es neben vulkanischen Bestandteilen Braunkohle enthält. Hierdurch soll ein möglichst oberbodenähnliches Aussehen des Pflanzsubstrats erzielt werden, wobei die Braunkohle über entsprechende Wasserspeicherkapazität, eine gute Kationenaustauschkapazität und einen hohen Luftporengehalt verfügen soll. Schließlich ist auch die Verwitterungsresistenz der Braunkohle als Vorzug erwähnt.

Die Verwendung von Braunkohle als organischer Substratausgangsstoff ist allerdings mit dem Nachteil behaftet, dass die Huminstoffkonzentration und die Nährstoffbefrachtung stark schwanken können. In der Literatur wird sogar teilweise die Auffassung vertreten, dass Braunkohle bei stärkerer lokaler Anreicherung für die Bodenfruchtbarkeit störend sein kann.

Der Erfindung liegt daher die Aufgabe zugrunde, ein Kultursubstrat der eingangs genannten Art im Hinblick auf eine etwaige Schadstoffbelastung und im Hinblick auf eine gewünschte dosierte Nährstoffabgabe zu verbessern.

Die Aufgabe wird gelöst durch ein Kultursubstrat als antropogen hergestellter Bodenersatz auf Basis mineralischer Substratausgangsstoffe, umfassend wenigstens einen Zusatz eines organischen Substratausgangsstoffs, welches sich dadurch auszeichnet, dass als organischer Substratausgangsstoff Xylit vorgesehen ist.

Xylit ist ein Bestandteil jungtertiärer Weichbraunkohlen, der auch als sog. Braunkohlenfaserholz bezeichnet wird. Es handelt sich hierbei um einen schadstofffreien Rohstoff mit niedrigen Asche- und Schwefelgehalten. Xylit ist durch biochemische Umwandlung aus der ursprünglichen Phytomasse entstanden und zeichnet sich durch eine hohe innere Porosität und durch eine hohe Speicherkapazität für Wasser aus. Der Einsatz von Xylit als organischer Substratausgangsstoff ermöglicht die Herstellung von torffreien oder torfreduzierten Kultursubstraten ohne störende Einflussfaktoren auf die chemischen, physikalischen und biologischen Eigenschaften des Substrats. Der Gehalt an pflanzenverfügbaren Nährstoffen bleibt gering, ebenso wie der pH-Wert, ohne negative Effekte in der Substratphysik oder Substratbiologie zu verursachen. Insbesondere lassen sich xylithaltige Substrate ideal mit Nährstoffen und pH-Wert erhöhenden Carbonaten bevorraten. Darüber hinaus erhöht Xylit die Strukturstabilität des Kultursubstrats und besitzt eine außerordentlich hohe Resistenz gegen biologischen Abbau. Das Kultursubstrat gemäß der Erfindung besitzt durch die Zugabe von Xylit eine hervorragende Lagerstabilität. Bisher herrscht insbesondere im Zusammenhang mit der Herstellung von Bodenverbesserungsmitteln bei Fachleuten die Meinung, Xylit habe vorteilhafte Eigenschaften nur dann, wenn dieses zu einem Faserstoff aufgeschlossen werde, denn nur dann sei die innere Porosität des Xylits nutzbar.

Ähnliches ist hierzu in der DE 101 23 903 A1 ausgeführt.

Überraschenderweise hat sich gezeigt, dass es entgegen dieser verbreiteten Auffassung nicht erforderlich ist, Xylit zu einem Faserstoff aufzuschließen. Gerade ein solcher weitestgehender Aufschluss des Xylits würde die Verwendung von Xylit als organischem Substratausgangsstoff unwirtschaftlich erscheinen lassen.

Erfindungsgemäß ist deshalb vorgesehen, dass das Xylit stückig und/oder körnig, ohne Faseraufschluss homogen mit dem mineralischen Substratausgangsstoff vermischt ist. Das Stückigmachen bzw. Körnigmachen des Xylits als organischer Substratausgangsstoff kann mit bekannten Hammermühlen erfolgen. Anschließend erfolgt dann zweckmäßigerweise eine Siebklassierung.

Eine vorteilhafte Variante des Kultursubstrats nach der Erfindung zeichnet sich dadurch aus, dass als mineralischer Substratausgangsstoff unter anderem vulkanische Gesteine und/oder Gesteinsgemische, vorzugsweise in Kornform vorgesehen sind.

Alternativ kommen als mineralische Substratausgangsstoffe Kiese, Sande, Tuff, aufbereitete Tone, wie beispielsweise Perlite, Vermiculit, Blähton, Blähschiefer oder Schlacken/Aschen, Kesselsand, Schmelzkammergranulat, Zeolithe, Steinwolle, Schaumglas, Rübenwascherde, Schieferschlacke, Rostasche, Gas- und Porenbeton, weich und hart gebrannte Tone und Tongranulate oder dergleichen in Betracht.

Bei einer bevorzugten Variante des Kultursubstrats nach der Erfindung, das beispielsweise als Dachgartensubstrat Anwendung finden kann, sind als vulkanische Substratausgangsstoffe Bims und/oder Lava vorgesehen, die unter anderem wegen ihrer Porosität hervorragende Wasserspeichereigenschaften besitzen.

Eine bevorzugte Variante des Kultursubstrats gemäß der Erfindung zeichnet sich durch einen Anteil von 0,5 bis 12 Masse-% an organischem Substratausgangsstoff aus.

Bei einem besonders für die Dachbegrünung geeigneten Kultursubstrat ist vorgesehen, dass dieses einen Anteil von 1 bis 6 Masse-% an organischem Substratausgangsstoff beinhaltet.

Bei einem Kultursubstrat für Sonderkulturen kann der Anteil an organischem Substratausgangsstoff höher als 12 Masse-% sein.

Das Kultursubstrat nach der Erfindung kann einen Zusatz von strukturgebenden Substratausgangsstoffen aufweisen. Hier kommen beispielsweise auch Kunststoffe, wie Polystyrol, Styromull, Hygromull, Styropor oder wasserabsorbierende Polymere in Betracht.
Bei einer Variante des Kultursubstrats gemäß der Erfindung ist vorgesehen, dass als mineralischer Substratausgangsstoff gebrannte Tone und/oder Tongranulate vorgesehen sind. Ein solches Kultursubstrat eignet sich insbesondere als Baumsubstrat zur Auffüllung von Pflanzgruben.

Der mineralische Substratausgangsstoff, beispielsweise für Baumsubstrate, kann eine Körnung von 0 bis 32 mm aufweisen. Vorzugsweise besitzt auch der organische Substratausgangsstoff eine Körnung von 0 bis 40 mm.

Zweckmäßigerweise sind die Körnungslinien aller mineralischen Substratausgangsstoffe einander etwa entsprechend oder gleichen sich.

Das Xylit kann je nach Anwendungszeck des Kultursubstrats mit einem organischen Dünger angereichert sein.

Ein besonders vorteilhaftes Kultursubstrat nach der Erfindung kann beispielsweise folgende Zusammensetzung aufweisen:
50 bis 90 Masse-% Lava, 10 bis 50 Masse-% Bims und 1 bis 12 Masse-% Xylit.

Bei den vorstehenden Angaben ergeben die mineralischen Substratausgangsstoffe 100 %, der organische Substratausgangsstoff wird auf den mineralischen Substratausgangsstoff bezogen. Eine solche Angabe der Verteilung der Mischungsbestandteile ist fachüblich.

Beispielsweise kann die Mischung Lava in einer Körnung von 0 bis 12 mm, vorzugsweise in einer Körnung von 0 bis 8 mm und Bims in einer Körnung von 0 bis 8 mm, vorzugsweise in einer Körnung von 0 bis 6 mm aufweisen.

Ein solches Kultursubstrat ist besonders für die Verwendung als Dachgartensubstrat geeignet.

Eine weitere vorteilhafte Verwendung des vorstehend beschriebenen Kultursubstrats ist beispielsweise die Verwendung als Vegetationssubstrate für Bäume.

Die Erfindung wird nachstehend anhand von Beispielen erläutert.

Nachstehend werden zunächst verschiedene Kultursubstrate für die Dachbegrünung vorgestellt. Bei Dachbegrünungen sind in Abhängigkeit von der Nutzung, den bautechnischen Gegebenheiten und der Bauweise die Nutzungsarten Intensivbegrünung, einfache Intensivbegrünung und Extensivbegrünung zu unterscheiden.

Die Intensivbegrünung umfasst Pflanzungen von Stauden und Gehölzen sowie Rasenflächen, im Einzelfall auch Bäume. Intensivbegrünungen können flächig, höhendifferenziert oder punktuell ausgebildet sein. Einfache Intensivbegrünungen sind in der Regel als bodendeckende Begrünungen mit Gräsern, Stauden und Gehölzen ausgebildet, wohingegen Extensivbegrünungen naturnah angelegte Vegetationsformen sind, die sich weitgehend selbst erhalten und weiterentwickeln.

Der Aufbau von Vegetationsflächen für die zuvor erwähnten Begrünungsarten besteht in der Regel aus mehreren Funktionsschichten mit stoff- und bauartspezifischen Unterschieden in der Anordnung, die in ihrer Wirkungsweise aufeinander abgestimmt sind. Dabei wird unterschieden zwischen mehrschichtigen Bauweisen, beispielsweise bestehend aus einer getrennt ausgebildeten Dränschicht, einer Filterschicht und einer Vegetationstragschicht oder aus einer Drän- und Vegetationstragschicht, die auch die Filterfunktion übernimmt. Eine Dachbegrünung in einschichtiger Bauweise besteht aus einer Vegetationstragschicht, die die Dränage- und Filterfunktion mit erfüllt. Entsprechend der unterschiedlichen Bauweisen der Dachbegrünungen werden unterschiedliche Kultursubstrate bereitgestellt.

Erfindungsgemäß wird als Kultursubstrat für eine Extensivbegrünung in einschichtiger Bauweise eine folgende Mischung vorgeschlagen:
Lava der Körnung 0/8 oder 0/12 mit 65 Masse-%
Bims der Körnung 0 bis 12 mit 35 Masse-%
Xylit mit 3 Masse-%.

Für eine Extensivbegrünung in mehrschichtiger Bauweise wird erfindungsgemäß folgendes Kultursubstrat vorgeschlagen:
Lava der Körnung 0/8 oder 0/12 mit 60 Masse-%
Bims der Körnung 0 bis 12 mit 40 Masse-%
Xylit mit 5 Masse-%.

Für eine Intensivbegrünung
Lava der Körnung 0/8 mit 40 Masse-%
Bims der Körnung 0 bis 6 mit 60 Masse-%
Xylit mit 5,8 Masse-%

Die nachstehenden Abbildungen 1 bis 3 zeigen die Kornverteilungsbereiche der zuvor genannten Kultursubstrate, wobei die Abbildung 1 den Kornverteilungsberech für das Kultursubstrat bei Intensivbegrünung darstellt, Abbildung 2 den Kornverteilungsbereich für das Kultursubstrat bei Extensivbegrünung in mehrschichtiger Bauweise darstellt, und Abbildung 3 den Kornverteilungsbereich für das Kultursubstrat bei Extensivbegrünung in einschichtiger Bauweise zeigt.

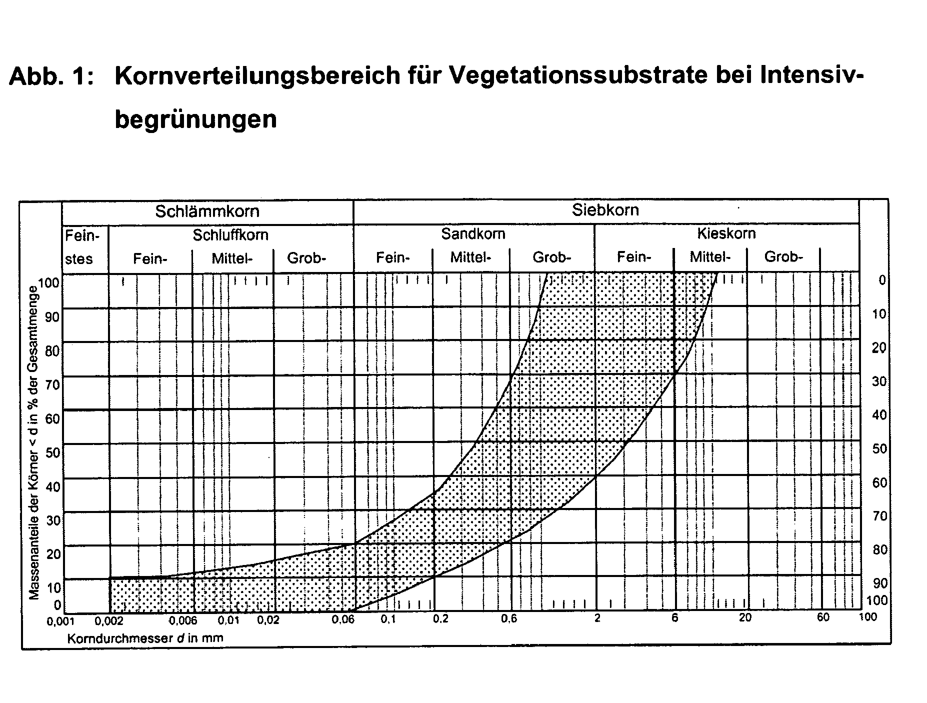

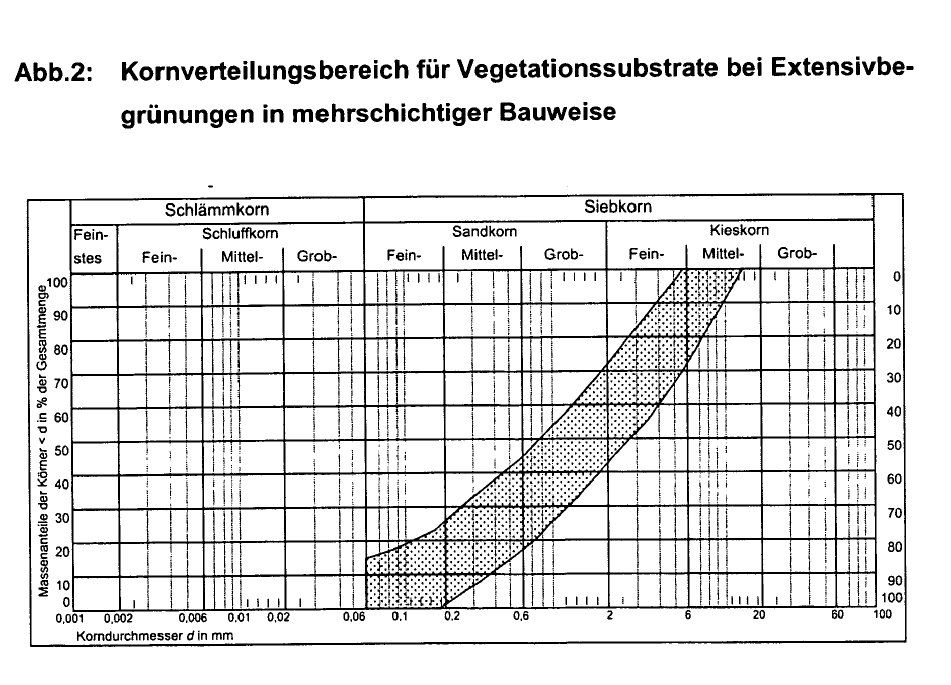

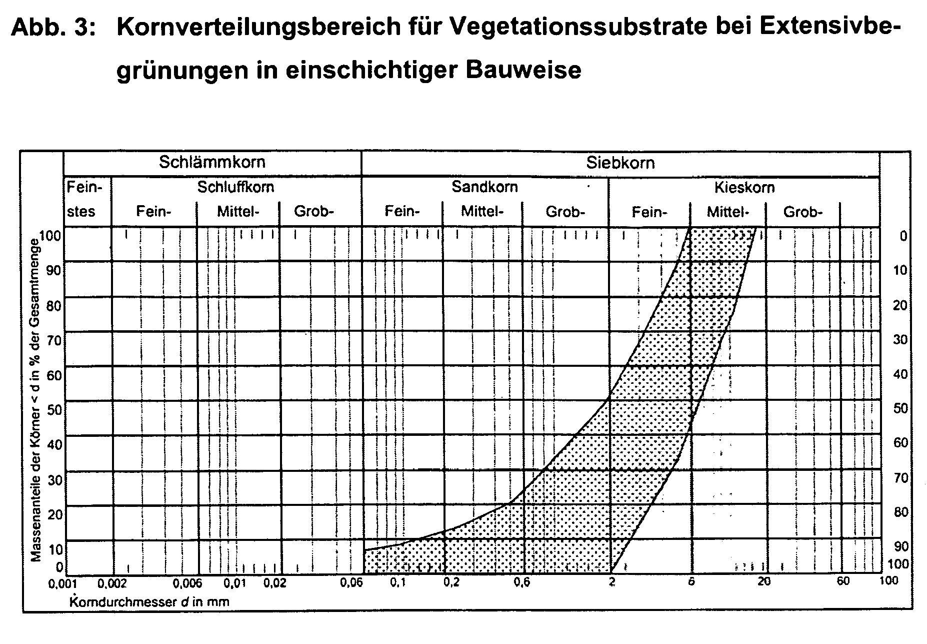

In der Tabelle 1 werden die vegetationstechnisch relevanten Kennwerte eines erfindungsgemäßen Kultursubstrats, umfassend Lava und Bims als mineralische Substratausgangsstoffe und Xylit als organischen Substratausgangsstoff einem marktüblichen Kultursubstrat mit Rindenhumus und Grünkompost gegenübergestellt. Bei dem erfindungsgemäßen Kultursubstrat ist Xylit mit einem Anteil von 5,8 Masse-% vorhanden, bei dem marktüblichen Kultursubstrat ist der gleiche Anteil von 5,8 Masse-% von Rindenhumus und Grünkompost vorgesehen.

Zu den tatsächlichen Messwerten ist jeweils vergleichsweise die an die betreffende Begrünungsart gestellte Anforderung aufgeführt.

**Tabelle 1**

| | **Anforderung** | **Einheiten** | **Xylit** | **Rindenhumus + Grünkompost** |
|---|---|---|---|---|
| ***Korngrößenverteilung*** | | | | |
| Anteil an abschlämmbaren Tei- | | | | |
| len (d ≤ 0,063 mm) | ≤ 15 | Massen-% | 13 | 14 |

| ***Rohdichte (Volumengewicht)*** | | | | |
|---|---|---|---|---|
| | | | | |
| in trockenem Zustand | - | g/cm³ | 1,01 | 0,97 |
| bei max. Wasserkapazität | - | g/cm³ | 1,36 | 1,31 |

| ***Wasser-*/*Luft-Haushalt*** | | | | |
|---|---|---|---|---|
| | | | | |
| Gesamtporenvolumen | - | Vol.-% | 61 | 63 |
| max. Wasserkapazität | ≥ 35 | Vol.-% | 36 | 35 |
| Luftgehalt bei max. Wasser- | ≥ 10 | Vol.-% | 25 | 28 |
| kapazität | | | | |
| Luftgehalt bei pf 1,8 | ≥ 25 | Vol.-% | | |
| Wasserdurchlässigkeit mod. K_{f} | ≥ 0,001 ≥ 0,6 | cm/s mm/min | 0,05 32,3 | 0,07 41,2 |

| ***pH-Wert, Salzgehalt*** | | | | |
|---|---|---|---|---|
| | | | | |
| pH-Wert (CaCl₂) | 6,5 - 8,0 | | 6,6 | 6,7 |
| Salzgehalt (Wasserextrakt) | ≥ 3,5 | g/l | 0,2 | 0,3 |
| Salzgehalt (Gipsextrakt) | ≥ 2,5 | g/l | | |

| *Organische Substanz* | | | | |
|---|---|---|---|---|
| | | | | |
| Gehalt an organischer Substanz | | | | |
| bei Substraten ≤ 0,8 | ≤ 8,0 | Masse-% | | |
| bei Substraten < 0,8 | ≤ 6,0 | Masse-% | 5,8 | 5,7 |
| ***Nährstoffe und*** | | | | |

| ***Adsorptionskapazität*** | | | | |
|---|---|---|---|---|
| | | | | |
| Stickstoff (N) in (CaCl₂) | ≤ 80 | mg/l | 1 | 11 |
| Phosphat (P₂O₂) in (CAL) | ≤ 200 | mg/l | 30 | 58 |
| Kalium (K₂O) in (CAL) | ≤ 700 | mg/l | 293 | 514 |
| Magnesium (Mg) in (CaCl₂) | ≤ 160 | mg/l | 101 | 78 |
| Adsorptionskapazität (BaCl₂) | | mmol/Z/I | 80 | 118 |

In Abbildung 4 ist der Kornverteilungsbereich des untersuchten erfindungsgemäßen Dachsubstrats wiedergegeben.

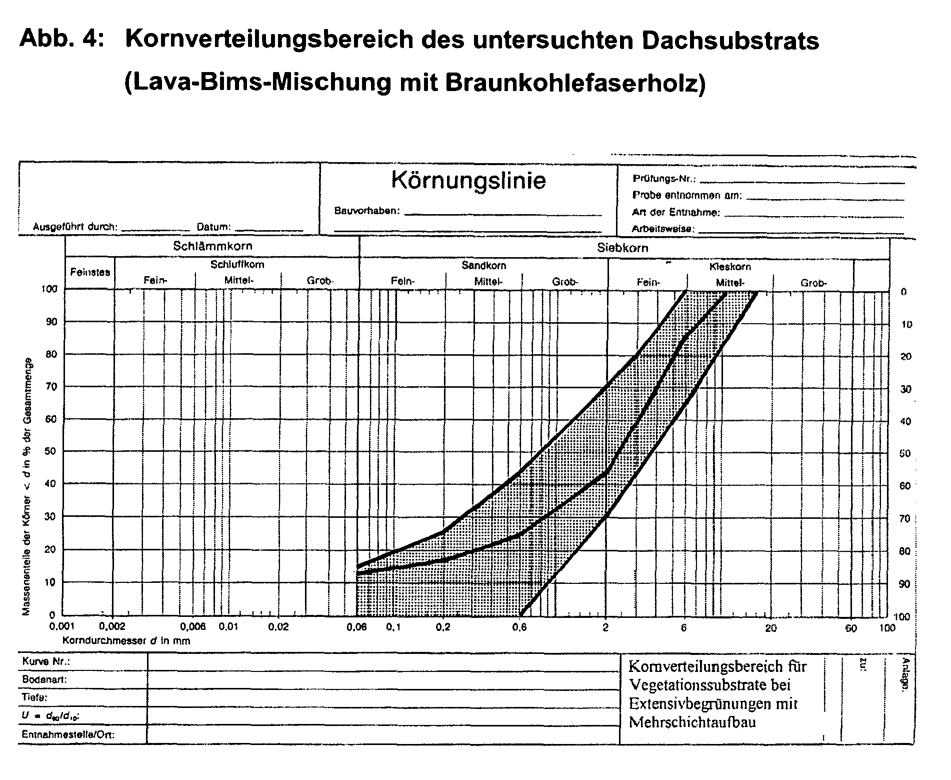

Nachstehend wird ein als Baumsubstrat verwendbares Kultursubstrat gemäß der Erfindung beschrieben. Baumsubstrate dienen zur Auffüllung von Boden- oder Baumgruben beispielsweise bei städtischer Bepflanzung. Dabei werden Pflanzungsgrubenbauweisen unterschieden, die ein- oder mehrschichtig ausgeführt werden können. In Abhängigkeit von der vorgesehenen Nutzung bzw. Belastung der Oberfläche werden Pflanzgruben unterschieden, die nicht oder nur freitragend überbaut werden und solche, die ganz oder teilweise als Verkehrsfläche überbaut werden. Das erfindungsgemäße Kultursubstrat zur Verwendung als Baumsubstrat für nicht überbaubare bzw. freitragende Bauweisen kann beispielsweise folgende Zusammensetzung aufweisen:
Ziegelbruch mit einer Körnung von 0 bis 32 mm zu 80 Masse-% und
Unterboden der Bodengruppe 2 mit einer Körnung von 0 bis 32 mm zu
20 Masse-% und
Xylit mit einem Anteil von 2 Masse-%

Der Begriff Boden ist, wie eingangs bereits erwähnt, hinsichtlich der Zusammensetzung nicht eindeutig definiert. Im Fachjargon wird zwischen Oberboden und Unterboden unterschieden, wobei Oberboden die oberste Schicht des durch physikalische, chemische und biologische Vorgänge belebten Bodens ist. Dieser ist für vegetationstechnische Zwecke besonders geeignet und enthält Wurzeln und Samen von standorttypischen Pflanzen. Unterboden hingegen ist die unter dem Oberboden liegende verwitterte Bodenschicht. Diese kann durch entsprechende Maßnahmen für Vegetationszwecke verwendbar gemacht werden. Unterboden im Sinne des vorliegenden Textes ist, obwohl dieser organische Bestandteile umfasst, nicht als organischer Substratausgangsstoff im Sinne der Erfindung anzusehen. Vielmehr ist der Unterboden als strukturgebender Substratausgangsstoff im Sinne der Erfindung anzusehen.

In der Tabelle 2 sind die Eigenschaften des erfindungsgemäßen Kultursubstrats als Baumsubstrat dargestellt. Die Messwerte sind jeweils den für die Art der Begrünung zu stellenden Anforderungen gegenübergestellt.

**Tabelle 2**

| **Eigenschaften** | | **Einheit** | **Anforderung** | **gemessener Kennwert** |
|---|---|---|---|---|
| ***Korngrößenverteilung (siehe Abbildung 1)*** | | | | |
| | | | | |
| Anteil an abschlämmbaren Teilen | | | | |
| (d < 0,063 mm) | | Masse-% | 5 - 25 | 16 |
| Größtkorn d = 31,5 mm | | | | |
| | | | | |

| ***Bodenluft-*/*Bodenwasserhaushalt*** | | | | |
|---|---|---|---|---|
| | | | | |
| Wasserdurchlässigkeit k_{f} | | m/s | - | 5,6 x 10⁻⁶ |
| Max. Wasserkapazität (max. WK) | | Vol.-% | - | 36,5 |
| Gesamtporenvolumen (GPV) | | Vol.-% | - | 41,6 |
| Luftvolumen bei pF 1,8 (weite Grobporen) | | Vol.-% | - | 12,5 |
| | | | | |

| ***Bodenchemie*** | | | | |
|---|---|---|---|---|
| | | | | |
| PH-Wert | (CaCl₂) | - | - | 7,2 |
| organische Substanz | (Glühverlust) | Masse-% | 2,0 - 4,0 | 2,5 |
| Salzgehalt | (Wasserauszug) | mg/100 g | ≤ 150 | 56 |
| löslicher Stickstoff | (CaCl₂) | mg/100 g | - | 48 |
| (NH₄-N + NO₃-N) | | | | |
| pflanzenverfügbares Phosphat | (CAL) | mg/100 g | - | 15 |
| pflanzenverfügbares Kalium | (CAL) | mg/100 g | - | 41 |

## Patentansprüche

1. Kultursubstrat als antropogen hergestellter Bodenersatz auf Basis mineralischer Substratausgangsstoffe, umfassend wenigstens einen Zusatz eines organischen Substratausgangsstoffs, **dadurch gekennzeichnet, dass** der organische Substratausgangsstoff Xylit umfasst.

2. Kultursubstrat nach Anspruch 1, **dadurch gekennzeichnet, dass** das Xylit stückig und/oder körnig ohne Faseraufschluss homogen mit dem mineralischen Substratausgangsstoff vermischt ist.

3. Kultursubstrat nach einem der Ansprüche 1 oder 2, **dadurch gekennzeichnet, dass** als mineralischer Substratausgangsstoff vulkanische Gesteine und/oder Gesteinsgemische, vorzugsweise in Kornform, vorgesehen sind.

4. Kultursubstrat nach Anspruch 3, **dadurch gekennzeichnet, dass** die vulkanischen Gesteine Bims und/oder Lava umfassen.

5. Kultursubstrat nach einem der Ansprüche 1 bis 4, **gekennzeichnet durch** einen Anteil von 0,5 bis 12 Masse-% an organischem Substratausgangsstoff.

6. Kultursubstrat nach einem der Ansprüche 1 bis 5, **gekennzeichnet durch** einen Anteil von 1 bis 6 Masse-% an organischem Substratausgangsstoff.

7. Kultursubstrat nach einem der Ansprüche 1 bis 6, **gekennzeichnet durch** einen Zusatz von strukturgebenden Substratausgangsstoffen.

8. Kultursubstrat nach einem der Ansprüche 1, 2 oder 4 bis 6, **dadurch gekennzeichnet, dass** der mineralische Substratausgangsstoff gebrannte Tone und/oder Tongranulate umfasst.

9. Kultursubstrat nach einem der Ansprüche 1 bis 8, **dadurch gekennzeichnet, dass** der mineralische Substratausgangsstoff eine Körnung von 0 bis 32 mm aufweist.

10. Kultursubstrat nach einem der Ansprüche 1 bis 9, **dadurch gekennzeichnet, dass** der organische Substratausgangsstoff eine Körnung von 0 bis 40 mm aufweist.

11. Kultursubstrat nach einem der Ansprüche 1 bis 10, **dadurch gekennzeichnet, dass** die Körnungslinien aller mineralischen Substratausgangsstoffe einander etwa entsprechen oder gleichen.

12. Kultursubstrat nach einem der Ansprüche 1 bis 11, **dadurch gekennzeichnet, dass** das Xylit mit einem organischen Dünger angereichert ist.

13. Kultursubstrat nach einem der Ansprüche 1 bis 12, **gekennzeichnet durch** folgende Bestandteile:
50 bis 90 Masse-% Lava,
10 bis 50 Masse-% Bims, und
1 bis 12 Masse-% Xylit.

14. Kultursubstrat nach Anspruch 13, **dadurch gekennzeichnet, dass** die Lava eine Körnung 0 bis 12 mm, oder von 0 bis 8 mm, und der Bims eine Körnung von 0 bis 8 mm, oder von 0 bis 12 mm, aufweist.

15. Verwendung eines Kultursubstrats nach einem der Ansprüche 1 bis 7 oder 9 bis 14 als Dachgartensubstrat.

16. Verwendung eines Kultursubstrats nach einem der Ansprüche 1 bis 6 oder 8 bis 12 als Baumsubstrat.
